# EUROPEAN PATENT APPLICATION

(11) **EP 3 450 731 A1**
(43) Date of publication of application: **06.03.2019**
(21) Application number: 17789395.5
(22) Date of filing: 20.04.2017
(51) Int. Cl.: F02D 13/02, F01N 3/20, F02D 41/06, F02D 43/00

(54) **CONTROL DEVICE FOR INTERNAL COMBUSTION ENGINE AND INTERNAL COMBUSTION ENGINE SYSTEM**

(30) Priority: 27.04.2016 JP 2016088668
(71) Applicant: Isuzu Motors Limited, Shinagawa-ku Tokyo 140-8722 (JP)
(72) Inventor: YAMAMOTO, Kazunari, Fujisawa-shi, Kanagawa 252-0881 (JP)
(74) Representative: Miller Sturt Kenyon
(86) International application number: PCT/JP2017/015872
(87) International publication number: WO 2017/188112

(57) **Abstract**

The control device 80 for an internal combustion engine comprises a control unit 81 configured to perform control processing comprising, during warming-up of the internal combustion engine 10, advancing valve opening timing and valve closing timing of an exhaust valve 18 of the internal combustion engine 10 with respect to respective preset reference values thereof, and retarding fuel injection timing of the internal combustion engine 10 with respect to a preset reference value thereof. According to this control device 80 for the internal combustion engine, warming-up of the internal combustion engine 10 can be effectively facilitated, and the warming-up time of the internal combustion engine 10 can thus be shortened.

## Description

### Technical Field

The present disclosure relates to a control device for an internal combustion engine, and an internal combustion engine system.

### Background Art

There has been known an internal combustion engine system, which includes an exhaust post-treatment device for treating nitrogen oxides (NOx) in exhaust gas (see, for example, PTL 1). Specifically, PTL 1 discloses an internal combustion engine system including a urea SCR (Selective Catalytic Reduction) device as the exhaust post-treatment device in an exhaust passage of a diesel engine. In such an internal combustion engine system, it is difficult to sufficiently demonstrate the performance of the internal combustion engine when the internal combustion engine is at a low temperature, for example just after the start of the internal combustion engine. In addition, since a temperature of the exhaust gas is also low when the internal combustion engine is at a low temperature, it is difficult to sufficiently demonstrate the performance of the exhaust post-treatment device. Thus, in general, when the internal combustion engine is at a low temperature, the internal combustion engine is warmed up to increase the temperature of the internal combustion engine and to increase the temperature of the exhaust gas.

Another document related to the present disclosure is PTL 2. PTL 2 discloses a technique for changing opening and closing timing of an exhaust valve by using a variable valve mechanism.

### Citation List

### Patent Documents

PTL 1: JP-A-2013-217351
PTL 2: JP-A-2007-309147

### Summary of Invention

### Technical Problem

If a warming-up operation time of the internal combustion engine can be shortened, a fuel efficiency can be improved and the performance of the exhaust post-treatment device can be improved at an early stage. However, in the prior art, it is difficult to shorten the warming-up operation time of the internal combustion engine.

The present disclosure is made in view of the above, and an object of the present disclosure is to provide a control device for an internal combustion engine and an internal combustion engine system, in which a warming-up operation time of the internal combustion engine can be shortened.

### Solution to Problem

In order to achieve the above object, a control device for an internal combustion engine according to the present disclosure includes a control unit configured to perform a control process, the control process comprising, during a warming-up operation of the internal combustion engine, advancing valve opening timing and valve closing timing of an exhaust valve of the internal combustion engine with respect to respective preset reference values thereof, and retarding fuel injection timing of the internal combustion engine with respect to a preset reference value thereof.

According to the control device for an internal combustion engine of the present disclosure, during the warming-up operation of the internal combustion engine, the valve opening timing and the valve closing timing of the exhaust valve are advanced, so that a large amount of exhaust gas can remain in a cylinder of the internal combustion engine (that is, residual gas can be increased). Accordingly, the increased residual gas can be once compressed in an exhaust stroke to a high temperature and high pressure state, and thereby an internal energy in the residual gas can be increased. Then, at an initial opening stage of an intake valve in the next intake stroke, the residual gas with an increased internal energy can be temporarily released to an intake side, and during continuous opening of the intake valve in the intake stroke, the residual gas with an increased internal energy and fresh air can be introduced into the cylinder. Accordingly, an in-cylinder temperature in a compression stroke can be increased, so that a combustion temperature in a combustion and expansion stroke can be increased. As a result, an amount of heat transferred from the gas in the cylinder to the internal combustion engine increases, so that warming-up of the internal combustion engine can be facilitated.

In addition, according to the control device for an internal combustion engine of the present disclosure, the in-cylinder temperature is increased, and thereby misfire is less likely to occur even if the fuel injection timing is retarded. Therefore, the fuel injection timing can be further retarded while suppressing occurrence of the misfire.

Further, according to the control device for an internal combustion engine of the present disclosure, the fuel injection timing of the internal combustion engine is retarded during the warming-up operation of the internal combustion engine, so that the temperature of the exhaust gas can be effectively increased. Accordingly, the internal energy of the residual gas can be effectively increased, so that by introducing the residual gas with an increased internal energy into the cylinder together with the fresh air in the intake stroke, the in-cylinder temperature can be effectively increased and the warming-up can be effectively facilitated.

As described above, according to the control device for an internal combustion engine of the present disclosure, the warming-up operation of the internal combustion engine can be effectively facilitated, so that the warming-up operation time of the internal combustion engine can be shortened.

In addition, in order to achieve the above object, an internal combustion engine system according to the present disclosure includes: an internal combustion engine and a control device for the internal combustion engine, wherein the control device includes a control unit configured to perform a control process, the control process comprising, during a warming-up operation of the internal combustion engine, advancing valve opening timing and valve closing timing of an exhaust valve of the internal combustion engine with respect to respective preset reference values thereof, and retarding fuel injection timing of the internal combustion engine with respect to a preset reference value thereof.

According to the internal combustion engine system of the present disclosure, during the warming-up operation of the internal combustion engine, the valve opening timing and the valve closing timing of the exhaust valve are advanced and the fuel injection timing of the internal combustion engine is retarded, so that the warming-up operation of the internal combustion engine can be effectively facilitated, and the warming-up operation time of the internal combustion engine can be shortened, for the same reason as described above.

In the above configuration, an exhaust post-treatment device can be provided in an exhaust passage of the internal combustion engine. According to the above configuration, the warming-up operation time of the internal combustion engine is shortened by advancing the valve opening timing and the valve closing timing of the exhaust valve and retarding the fuel injection timing as described above, so that the temperature of the exhaust gas can be increased to a high temperature at an early stage. Accordingly, the performance of the exhaust post-treatment device can be improved at an early stage, and NOx can be treated at an early stage.

### Advantageous Effects of Invention

According to the control device for an internal combustion engine and the internal combustion engine system of the present disclosure, the warming-up operation time of the internal combustion engine can be shortened. Further, according to the present disclosure, the warming-up operation time of the internal combustion engine can be shortened as described above, so that the fuel efficiency of the internal combustion engine can be improved.

### Brief Description of Drawings

Fig. 1A is a schematic diagram schematically showing an overall configuration of an internal combustion engine system according to an embodiment.
Fig. 1B is a schematic diagram for explaining a configuration of an internal combustion engine.
Fig. 2 is an example of a flowchart executed by a control device during a warming-up operation of the internal combustion engine.
Fig. 3 is a pattern diagram showing variations in valve opening areas of an intake valve and an exhaust valve in a normal state and after exhaust valve advance control is executed.
Fig. 4A is a pattern diagram for explaining a variation in in-cylinder temperature in a vicinity of a compression end when the exhaust valve advance control according to the embodiment is executed.
Fig. 4B is a pattern diagram for explaining variations in in-cylinder temperature when the exhaust valve advance control and fuel injection retardation control according to the embodiment are executed.

### Description of Embodiments

Hereinafter, a control device 80 for an internal combustion engine 10 and an internal combustion engine system 1 including the control device 80 according to an embodiment of the present disclosure will be described with reference to the drawings. Regarding the drawings, dimensions are changed from actual products to make the configuration easy to understand, and a ratio of a thickness, a width, a length, or the like of each member and each component is not necessarily the same as an actual product ratio.

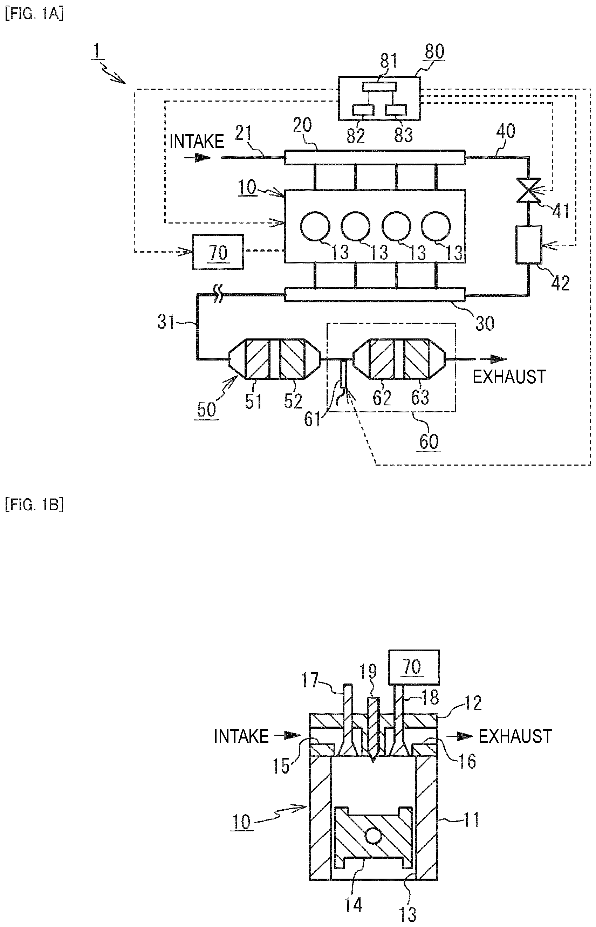

Fig. 1A is a schematic diagram schematically showing an overall configuration of the internal combustion engine system 1 according to the present embodiment. A specific type of a vehicle on which the internal combustion engine system 1 is mounted is not particularly limited, and a large-sized vehicle such as a bus or a truck is used in the present embodiment.

The internal combustion engine system 1 includes the internal combustion engine 10, an intake passage (an intake manifold 20, and an intake pipe 21 connected to an upstream end portion of the intake manifold 20), an exhaust passage (an exhaust manifold 30, and an exhaust pipe 31 connected to a downstream end portion of the exhaust manifold 30), an EGR (Exhaust Gas Recirculation) system (an EGR passage 40, an EGR valve 41 and an EGR cooler 42), an exhaust purification device 50, an exhaust post-treatment device 60, a variable valve mechanism 70, and the control device 80.

Fig. 1B is a schematic diagram for explaining a configuration of the internal combustion engine 10. The internal combustion engine 10 includes a cylinder block 11, a cylinder head 12 disposed above the cylinder block 11, and a piston 14 disposed in a cylinder 13 formed in the cylinder block 11. The cylinder head 12 is provided with an intake port 15 through which intake air passes and an exhaust port 16 through which exhaust gas passes. In addition, the internal combustion engine 10 includes an intake valve 17 for opening and closing the intake port 15, an exhaust valve 18 for opening and closing the exhaust port 16, and a fuel injection valve 19 for injecting fuel directly into the cylinder 13.

The internal combustion engine 10 is provided with a cooling passage (not shown) through which cooling water for cooling the internal combustion engine 10 passes. A specific configuration of the cooling passage is not particularly limited, and the cooling passage according to the present embodiment is provided in a peripheral portion of each cylinder 13 of the cylinder block 11 and a peripheral portion of the intake port 15 and the exhaust port 16 of the cylinder head 12. The cooling water is pumped by a water pump and cools the internal combustion engine 10 while flowing through the cooling passage.

A type of the internal combustion engine 10 is not particularly limited, and a diesel engine is used as an example in the present embodiment.

As shown in Fig. 1A, the EGR passage 40 is in communication with the exhaust manifold 30 and the intake manifold 20, and is a passage for guiding part of the exhaust gas in the exhaust passage to the intake passage. The exhaust gas passing through the EGR passage 40 is referred to as EGR gas. The EGR valve 41 and the EGR cooler 42 are connected to the middle of the EGR passage 40. The EGR valve 41 receives an instruction form the control device 80 to perform opening and closing operations, so as to adjust a flow amount of the EGR gas. The EGR cooler 42 receives an instruction form the control device 80 to perform operations, so as to cool the EGR gas.

The exhaust purification device 50 is disposed in the exhaust pipe 31. The exhaust purification device 50 according to the present embodiment includes a diesel oxidation catalyst 51, and a filter 52 capable of collecting particulate matters (PMs) such as soot contained in the exhaust gas. The filter 52 is disposed at a downstream side of the diesel oxidation catalyst 51. In the present embodiment, a diesel particulate filter is used as an example of the filter 52. The diesel oxidation catalyst 51 has a configuration in which a noble metal catalyst such as platinum (Pt) and palladium (Pd) is carried on a filter through which the exhaust gas can pass. The diesel oxidation catalyst 51 facilitates an oxidation reaction for changing nitrogen monoxide (NO) in the exhaust gas to nitrogen dioxide (NO₂) by an oxidation catalytic action of the noble metal catalyst. When a temperature of the exhaust gas is equal to or higher than a predetermined temperature, the PMs of the filter 52 can be burnt by the nitrogen dioxide generated in the diesel oxidation catalyst 51 and discharged as carbon dioxide (CO₂).

The exhaust post-treatment device 60 is disposed in the exhaust passage. Specifically, the exhaust post-treatment device 60 is disposed in an exhaust pipe 31 portion on a downstream side of the exhaust purification device 50. In the present embodiment, a urea SCR (Selective Catalytic Reduction) device is used as an example of the exhaust post-treatment device 60. The urea SCR device includes a urea water supply unit 61, a urea SCR catalyst 62, and an ammonia slip catalyst 63. The urea water supply unit 61 is disposed in the exhaust pipe 31 on an upstream side of the urea SCR catalyst 62 and on a downstream side of the filter 52, and includes a urea water injection valve for supplying the urea water to the exhaust gas after receiving an instruction from the control device 80.

The urea SCR catalyst 62 is a catalyst for selectively reducing NOx in the exhaust gas using ammonia (NH₃). A specific type of the urea SCR catalyst 62 is not particularly limited. For example, a known NOx selective reduction catalyst can be used, such as a base metal oxide such as vanadium, molybdenum and tungsten, and a noble metal such as zeolite. The ammonia slip catalyst 63 is disposed at a downstream side of the urea SCR catalyst 62. The ammonia slip catalyst 63 is an oxidation catalyst for oxidizing ammonia that has passed through the urea SCR catalyst 62.

When the urea water is supplied from the urea water supply unit 61 to the exhaust gas, urea in the urea water is hydrolyzed, and, as a result, ammonia is generated. The ammonia reduces NOx under the catalytic action of the urea SCR catalyst 62. As a result, nitrogen and water are generated. Accordingly, the urea SCR device as the exhaust post-treatment device 60 reduces the amount of the NOx in the exhaust gas. According to the present embodiment, due to including the ammonia slip catalyst 63, the ammonia is effectively suppressed form being discharged out of the internal combustion engine system 1.

As shown in Figs. 1A and 1B, the variable valve mechanism 70 is a mechanism capable of changing valve opening timing and valve closing timing of the exhaust valve 18 corresponding to each cylinder 13 under control of the control device 80. Since a known variable valve mechanism can be used as a configuration of the variable valve mechanism 70, a detailed description thereof will be omitted.

The control device 80 comprehensively controls operations of the internal combustion engine system 1 by controlling the fuel injection valve 19, the EGR valve 41, the EGR cooler 42, the urea water supply unit 61, and the variable valve mechanism 70 of the internal combustion engine 10. Such a control device 80 includes a microcomputer, the microcomputer including a CPU 81 having a function as a control unit for executing various control processes, and a ROM 82, a RAM 83 or the like having a function as a storage unit for storing various information and programs necessary for operations of the CPU 81.

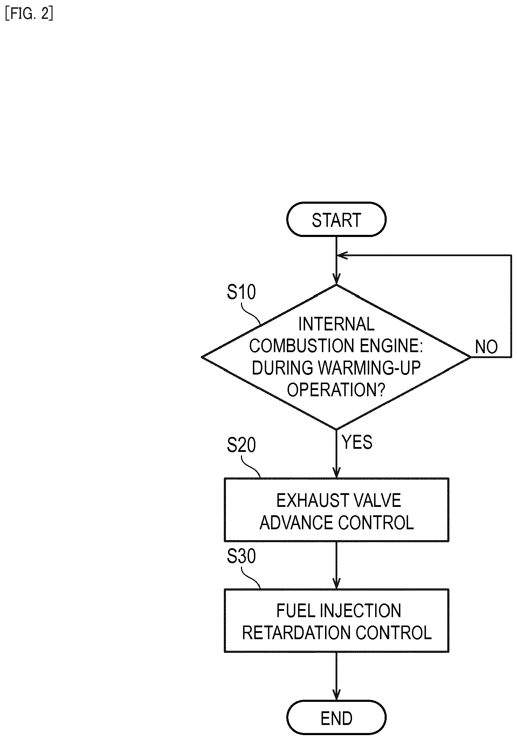

Next, a control process of the control device 80 during a warming-up operation of the internal combustion engine 10 will be described. Fig. 2 is an example of a flowchart executed by the control device 80 during the warming-up operation of the internal combustion engine 10. The control device 80 repeatedly executes the flowchart of Fig. 2 at a predetermined cycle after the internal combustion engine 10 starts. Specifically, each step in Fig. 2 is executed by the CPU 81 of the control device 80.

In step S10, the control device 80 determines whether the internal combustion engine 10 is in a warming-up operation state. Here, the control device 80 according to the present embodiment executes the warming-up operation of the internal combustion engine 10 from the start of the internal combustion engine 10 (cranking start) until the temperature of the internal combustion engine 10 is equal to or higher than a predetermined temperature. Then, during the warming-up operation of the internal combustion engine 10, the control device 80 particularly controls the fuel injection valve 19 of the internal combustion engine 10 such that a rotation speed of the internal combustion engine 10 (a rotation speed of a crankshaft) reaches a predetermined rotation speed slightly higher than an idle rotation speed. Then, in step S10, the control device 80 determines whether an operation state of the internal combustion engine 10 is a state during the warming-up operation, and it is determined to be YES when it is determined that the warming-up operation is being executed. The control device 80 repeatedly executes step S10 until it is determined to be YES.

In the present embodiment, a temperature of the cooling water in the internal combustion engine 10 is used as an example of the temperature of the internal combustion engine 10 described above. Specifically, the internal combustion engine system 1 according to the present embodiment includes a temperature sensor (not shown) for detecting the temperature of the cooling water in the internal combustion engine 10. The control device 80 acquires a detection result of the temperature sensor so as to acquire the temperature of the cooling water in the internal combustion engine 10. However, the temperature of the internal combustion engine 10 is not limited to such a temperature of the cooling water, and for example, a temperature of the cylinder block 11 in the internal combustion engine 10, a temperature of the cylinder head 12, or the like may be used as a representative example of the temperature of the internal combustion engine 10.

When it is determined to be YES in step S10 (that is, when the internal combustion engine 10 is in the warming-up operation), the control device 80 executes exhaust valve advance control for advancing the valve opening timing and the valve closing timing of the exhaust valve 18 (step S20). Specifically, the control device 80 controls the variable valve mechanism 70 to advance the valve opening timing and the valve closing timing of the exhaust valve 18 by predetermined advance amounts with respect to preset reference values. In the present embodiment, valve opening timing and valve closing timing of the exhaust valve 18 in a normal state of the internal combustion engine 10 are used as an example of the reference values.

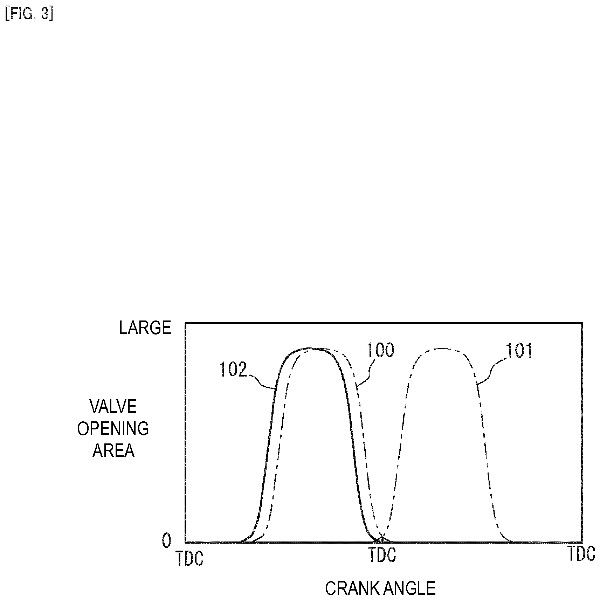

The exhaust valve advance control according to step S20 will be described with reference to the drawings as follows. Fig. 3 is a pattern diagram showing variations in valve opening areas of the intake valve 17 and the exhaust valve 18 in a normal state and after the exhaust valve advance control is executed. In Fig. 3, a vertical axis represents the opening area of the intake valve 17 or the exhaust valve 18, and a horizontal axis represents a crank angle. In Fig. 3, the more upward the vertical axis, the larger a valve lift amount of the intake valve 17 or the exhaust valve 18 is, and the larger the valve opening area is. A curve 100 indicates a variation in valve opening area of the exhaust valve 18 in the normal state. A curve 101 indicates a variation in valve opening area of the intake valve 17 in the normal state and after the exhaust valve advance control is executed. A curve 102 indicates a variation in valve opening area of the exhaust valve 18 after the exhaust valve advance control is executed.

In the exhaust valve advance control according to step S20, the variable valve mechanism 70 advances the valve opening timing and the valve closing timing of the exhaust valve 18 indicated by the curve 100 by a same angle (predetermined advance amount). As a result, after the exhaust valve advance control is executed, the opening area of the exhaust valve 18 changes from the curve 100 to the curve 102. Even if the exhaust valve advance control is executed, the valve opening timing and the valve closing timing of the intake valve 17 do not change, as indicated by the curve 101.

Referring again to Fig. 2, after step S20, the control device 80 executes fuel injection retardation control for retarding fuel injection timing of the internal combustion engine 10 (step S30). Specifically, the control device 80 controls the fuel injection valve 19 of the internal combustion engine 10 to retard the fuel injection timing by a predetermined retardation amount with respect to a preset reference value. In the present embodiment, the fuel injection timing in the normal state of the internal combustion engine 10 is used as an example of the reference value.

In step S30, the control device 80 according to the present embodiment does not change a fuel injection amount from a fuel injection amount in the normal state, but retards fuel injection start timing and fuel injection end timing.

However, the execution content of step S30 is not limited to the above contents. As another example, the control device 80 may be configured to retard the fuel injection timing with respect to a normal timing while increasing the fuel injection amount by a predetermined injection amount with respect to the fuel injection amount in the normal state in step S30. Accordingly, an in-cylinder temperature can be further increased by increasing the fuel injection amount.

The timing at which the control device 80 returns the opening and closing timing of the exhaust valve 18 to normal values or the timing at which the control device 80 returns the fuel injection timing to a normal value is not particularly limited. The control device 80 according to the present embodiment returns the above timing to the normal values at the end of the warming-up operation of the internal combustion engine 10. Specifically, the control device 80 determines whether the temperature of the internal combustion engine 10 is equal to or higher than a predetermined temperature after execution of step S20 and step S30. When it is determined that the temperature of the internal combustion engine 10 is equal to or higher than the predetermined temperature, the warming-up operation of the internal combustion engine 10 is ended, the valve opening timing and the valve closing timing of the exhaust valve 18 are returned to the normal values, and the fuel injection timing is returned to the normal value.

In the present embodiment, step S30 is executed after execution of step S20, but the order of execution of step S20 and step S30 is not limited thereto. For example, the exhaust valve advance control according to step S20 and the fuel injection retardation control according to step S30 may be executed at the same time, and the exhaust valve advance control according to step S20 may be executed after the fuel injection retardation control according to step S30.

However, as will be described later, the fuel injection timing can be further retarded while suppressing occurrence of misfire by executing the exhaust valve advance control according to step S20. Therefore, as described in the present embodiment, it is preferable to execute step S30 after execution of step S20 since the retardation amount of the fuel injection timing can be further increased in step S30 while suppressing occurrence of the misfire.

In the present embodiment, the CPU 81 of the control device 80 for executing step S20 and step S30 corresponds to a member having a function as a control unit which executes a control process such that during the warming-up operation of the internal combustion engine 10, the valve opening timing and the valve closing timing of the exhaust valve 18 are advanced with respect to the preset reference values, respectively, and the fuel injection timing is retarded with respect to the preset reference value.

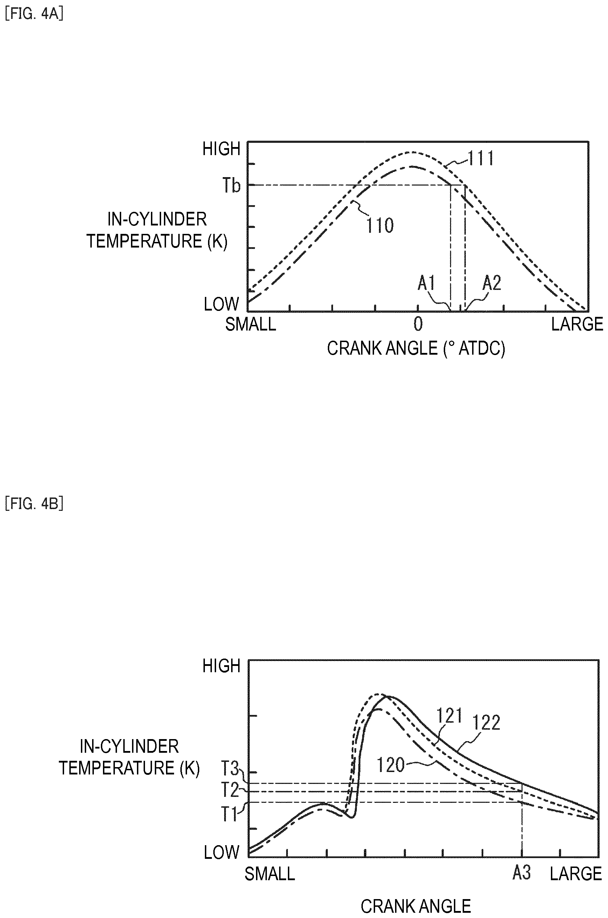

Next, operational effects of the present embodiment will be described. Fig. 4A is a pattern diagram for explaining a variation in in-cylinder temperature in a vicinity of a compression end when the exhaust valve advance control according to the present embodiment is executed. Specifically, in Fig. 4A, a vertical axis represents the in-cylinder temperature (K) and a horizontal axis represents a crank angle (° ATDC). In the vertical axis, a temperature Tb represents a temperature at which fuel can be burnt in the cylinder (in the cylinder 13). That is, when the in-cylinder temperature is lower than the temperature Tb, the fuel is difficult to burn in the cylinder, and when the in-cylinder temperature is equal to or higher than the temperature Tb, the fuel can burn in the cylinder. A curve 110 indicates a variation in in-cylinder temperature when the exhaust valve advance control is not executed (that is, in the normal state), and a curve 111 indicates a variation in in-cylinder temperature when the exhaust valve advance control is executed.

When comparing the curve 111 and the curve 110, the curve 111 is generally located above the curve 110. Accordingly, the in-cylinder temperature can be increased wholly by executing the exhaust valve advance control. This is due to the following reasons.

Specifically, during the warming-up operation of the internal combustion engine 10, the valve opening timing and the valve closing timing of the exhaust valve 18 are advanced, so that a large amount of exhaust gas can remain in the cylinder of the internal combustion engine 10 (that is, residual gas can be increased). Accordingly, the increased residual gas can be once compressed in an exhaust stroke to a high temperature and high pressure state, and thereby an internal energy in the residual gas can be increased. Then, at an initial opening stage of the intake valve 17 in the next intake stroke, the residual gas with an increased internal energy can be temporarily released to an intake side. During continuous opening of the intake valve 17 in the intake stroke, the residual gas with an increased internal energy and fresh air can be introduced into the cylinder. Accordingly, as indicated by the curve 111, the in-cylinder temperature in a compression stroke can be increased.

Increasing the in-cylinder temperature in a compression stroke can increase a combustion temperature in a combustion and expansion stroke. Accordingly, an amount of heat transferred from the gas in the cylinder to the internal combustion engine 10 (specifically, the amount of heat transferred from the gas in the cylinder to the cooling water of the internal combustion engine 10) increases, so that the warming-up of the internal combustion engine 10 can be facilitated.

According to the present embodiment, in the curve 110, the crank angle corresponding to the in-cylinder temperature Tb at which the fuel can be burnt is A1, while in the curve 111, the crank angle corresponding to the in-cylinder temperature Tb is retarded to A2. Accordingly, the timing (crank angle) at which the misfire does not occur can be delayed by increasing the in-cylinder temperature by executing the exhaust valve advance control. Therefore, according to the present embodiment, the fuel injection timing can be further retarded while suppressing occurrence of the misfire by executing the exhaust valve advance control.

Further, according to the present embodiment, during the warming-up operation of the internal combustion engine 10, not only the exhaust valve advance control in step S20 but also the fuel injection retardation control in step S30 are executed. According to the present embodiment, the fuel injection timing of the internal combustion engine 10 can be retarded by the fuel injection retardation control, and thereby the temperature of the exhaust gas discharged from the internal combustion engine 10 can be effectively increased. As a result, the internal energy of the residual gas can be effectively increased, so that by introducing the residual gas with an increased internal energy into the cylinder together with the fresh air in the intake stroke, the in-cylinder temperature can be effectively increased. Accordingly, the warming-up can be effectively facilitated, so that the warming-up operation time of the internal combustion engine 10 can be shortened.

Variations in in-cylinder temperature when the exhaust valve advance control and the fuel injection retardation control according to the present embodiment are executed will be described with reference to the drawings as follows. Fig. 4B is a pattern diagram for explaining variations in in-cylinder temperature when the exhaust valve advance control and the fuel injection retardation control according to the present embodiment are executed. Specifically, in Fig. 4B, a vertical axis represents the in-cylinder temperature and a horizontal axis represents the crank angle. A curve 120 indicates a simulation result of the in-cylinder temperature when neither the exhaust valve advance control nor the fuel injection retardation control is executed. A curve 121 indicates a simulation result of the in-cylinder temperature when only the exhaust valve advance control is executed. A curve 122 indicates a simulation result of the in-cylinder temperature when both the exhaust valve advance control and the fuel injection retardation control are executed. Compared with the curve 120, the curve 122 indicates a simulation result when the fuel injection timing is retarded by 4 (° ATDC).

As can be seen by comparing the curves 120 to 122 at a crank angle A3 in Fig. 4B, an in-cylinder temperature T1 is obtained in the curve 120, an in-cylinder temperature T2 (> T1) is obtained in the curve 121, and an in-cylinder temperature T3 (> T2) is obtained in the curve 122. That is, as also can be seen from Fig. 4B, as indicated by the curve 121, the in-cylinder temperature can be increased by executing the exhaust valve advance control, and further, as indicated by the curve 122, the in-cylinder temperature can be further increased by executing both the exhaust valve advance control and the fuel injection retardation control.

As described above, according to the present embodiment, the in-cylinder temperature can be effectively increased and the warming-up can be effectively facilitated by executing the fuel injection retardation control in addition to the exhaust valve advance control. Accordingly, the warming-up operation time of the internal combustion engine 10 can be shortened.

Further, according to the present embodiment, the warming-up operation time can be shortened, so that the fuel efficiency of the internal combustion engine 10 can be improved. In addition, as a result of shortening of the warming-up operation time, the temperature of the exhaust gas is increased to a high temperature at an early stage. Therefore, the performance of the exhaust post-treatment device 60 can be improved at an early stage, and NOx can be treated by the exhaust post-treatment device 60 at an early stage.

Although the preferred embodiments of the present disclosure have been described above, the present disclosure is not limited to such specific embodiments, and various modifications and changes can be made within the scope of the gist of the present disclosure described in the claims.

This application is based on the Japanese patent application (Japanese Patent Application No. 2016-088668) filed on April 27, 2016, the contents of which are incorporated herein by reference.

### Industrial Applicability

The present invention has an effect of shortening the warming-up operation time of the internal combustion engine, and is useful for a control device for an internal combustion engine, an internal combustion engine system, or the like.

### Reference Signs List

- 1: Internal combustion engine system
- 10: Internal combustion engine
- 17: Intake valve
- 18: Exhaust valve
- 19: Fuel injection valve
- 40: EGR passage
- 50: Exhaust purification device
- 60: Exhaust post-treatment device
- 70: Variable valve mechanism
- 80: Control device
- 81: CPU (Control unit)

## Claims

1. A control device for an internal combustion engine, the control device comprising a control unit configured to perform a control process, the control process comprising, during a warming-up operation of the internal combustion engine, advancing valve opening timing and valve closing timing of an exhaust valve of the internal combustion engine with respect to respective preset reference values thereof, and retarding fuel injection timing of the internal combustion engine with respect to a preset reference value thereof.

2. The control device for an internal combustion engine according to claim 1, wherein the control unit is configured to perform the control process comprising advancing such that the valve opening timing and the valve closing timing of the exhaust valve of the internal combustion engine with respect to the respective reference values thereof, and thereafter, retarding the fuel injection timing of the internal combustion engine with respect to the reference value thereof.

3. An internal combustion engine system, comprising:
an internal combustion engine; and
a control device for the internal combustion engine,
wherein the control device comprises a control unit configured to perform a control process, the control process comprising, during a warming-up operation of the internal combustion engine, advancing valve opening timing and valve closing timing of an exhaust valve of the internal combustion engine with respect to respective preset reference values thereof, and retarding fuel injection timing of the internal combustion engine with respect to a preset reference value thereof.

4. The internal combustion engine system according to claim 3, wherein the control unit is configured to perform the control process comprising advancing the valve opening timing and the valve closing timing of the exhaust valve of the internal combustion engine with respect to the respective reference values thereof, and thereafter, retarding the fuel injection timing of the internal combustion engine with respect to the reference value thereof.

5. The internal combustion engine system according to claim 4, further comprising an exhaust post-treatment device in an exhaust passage of the internal combustion engine.
